# EUROPÄISCHE PATENTANMELDUNG

(11) **EP 4 135 168 A1**
(43) Veröffentlichungstag der Anmeldung: **15.02.2023**
(21) Anmeldenummer: 22187123.9
(22) Anmeldetag: 27.07.2022
(51) Int. Cl.: H02K 5/22, H01R 13/621

(54) **ELEKTRISCHE SCHNITTSTELLENEINRICHTUNG FÜR EINEN ELEKTROMOTOR**

(30) Priorität: 09.08.2021 DE 102021120677
(71) Anmelder: ebm-papst Mulfingen GmbH & Co. KG, 74673 Mulfingen (DE)
(72) Erfinder: STURM, Michael, 97980 Bad Mergentheim (DE)
(74) Vertreter: Staeger & Sperling Partnerschaftsgesellschaft mbB

(57) **Zusammenfassung**

Die Erfindung betrifft eine Elektronikeinheit und eine steckbare Anschlussbox (40) zum steckbaren Anschluss eines darin integrierten Anschlusssteckverbinders (50) in Steckrichtung (S) in eine steckkompatible Steckbuchse (21) eines Elektronikgehäuses (20) einer Elektronikeinheit (1) eines Elektromotors, wobei die Anschlussbox (40) ein Gehäuse (41) mit einem durch Gehäusewandungen (43) begrenzten, topfartigen Aufnahmebereich (42) zur Aufnahme eines Kontaktträgers (51) des Anschlusssteckverbinders (50), wobei im Aufnahmebereich (42) mehrere sich in Steckrichtung (S) erstreckende hohlzylinderförmige Schraubenbuchsen (44) vorgesehen sind und wobei der Kontaktträger (51) an mehreren zu denjenigen Positionen der Schraubenbuchsen (44) korrespondierenden Positionen außenliegende Führungsmittel (52) aufweist, an denen der Kontaktträger (51) in seine Endmontageposition geführt werden kann und in der Endmontageposition die jeweiligen Führungsmittel (52) die zylinderförmigen Schraubenbuchsen (44) zumindest teilweise umgreifen.

## Beschreibung

Die vorliegende Erfindung betrifft eine elektrische Schnittstelleneinrichtung für einen Elektromotor, die insbesondere eine Verbindung zum baukastenartigen Anschluss einer Kundenschnittstelle mit einem Motor ermöglicht.

Im Stand der Technik sind Motor-Anschlusseinrichtungen, die einen Zwischenträger als Klemmkasten aufweisen, bekannt, welcher Anschlusskontakte für die äußeren Anschlussleitungen sowie Kontaktelemente für die Verbindung zur Steuerelektronik trägt, wobei der Zwischenträger im Bereich von Kontakt-Durchführöffnungen der Wandung des Elektronikgehäuses teilweise mehrere Dichtungen zur dichtenden Anlage an der Wandung des Elektronikgehäuses aufweist. Ein solcher Klemmkasten wird zum Beispiel mit Flachstecker bestückt und in eine im Gehäuse ausgebildete Klemmkastenaufnahme eingesetzt. Bauartbedingt, sind daher mit Nachteil mehrere in Axialrichtung vorhandene Dicht- und Kontaktbereiche (elektronische Kontaktstellen) in unterschiedlichen Dichtebenen bzw. Ebenen vorhanden.

Motoranschlussschnittstellen werden nicht immer als Klemmkasten, sondern teilweise als steckbare Lösung, somit als Steckverbindung ausgebildet, so dass der Anwender oder Kunde mit seinem anwendungsspezifischen Motoranschlusskabel eine lösbare Verbindung mit dem Motor herstellen kann. Allerdings gibt es neben der Variantenvielfalt auch die zusätzliche Anforderung an den IP-Schutz, was den Einsatz von steckbaren Lösungen erschwert. Die seit Jahrzehnten international genormte IP-Schutzart gibt die Eignung von elektrischen Betriebsmitteln für verschiedene definierte Umgebungsbedingungen an, den Schutz von Personen gegen potentielle Gefährdung durch einen Stromschlag bei deren Benutzung zu gewährleisten.

Bei vielen elektrischen Applikationen müssen elektrische und elektronische Geräte unter erschwerten Umweltbedingungen über viele Jahre sicher und zuverlässig funktionieren. Außer dem zulässigen Temperaturbereich stellt die korrosive Belastung, hierunter wird die Beständigkeit gegen aggressive Medien in der Industrie wie Feuchte, Wasser, Dämpfe, Säuren, Laugen, Öl oder Kraftstoffe verstanden, eine Einsatzbeschränkung dar.

In der IEC/EN 60529 sind die IP-Schutzarten normativ definiert. Den in der Schutzartbezeichnung immer vorhandenen Buchstaben IP werden zwei Kennziffern angehängt. Diese zeigen an, welchen Schutzumfang ein Gehäuse bezüglich Berührung bzw. Fremdkörper (erste Kennziffer) und Feuchtigkeit bzw. Wasser (zweite Kennziffer) bietet.

Der internationale Standard EN 60034-Teil 5 bzw. die Konkordanz VDE 0530-5 gilt für die Einteilung der Schutzarten drehender elektrischer Maschinen durch ein Gehäuse. Sie legt die Anforderungen an die Gehäuse fest, die in jeder anderen Hinsicht für ihre beabsichtigte Verwendung geeignet sind und die hinsichtlich der Werkstoffe und Verarbeitung sicherstellen, dass die in dieser Norm angegebenen Eigenschaften bei bestimmungsgemäßer Anwendung erhalten bleiben.,

Aus der DE 10 2015 11 9002 A1 ist zum Beispiel eine Anschlusslösung aus dem Stand der Technik bekannt, wie eine Verbindung zu einem Elektromotor realisiert sein kann. Aus der DE 10 2019 005 171 A1 ist ein Elektromotor bekannt, der insbesondereein Außenläufermotor ist, mit einem Rotor, einem Stator, einem Elektronikgehäuse und wenigstens einem Aufnahmeraum bekannt. Das Elektronikgehäuse hat einen Einbauraum für elektrische/elektronische Bauteile, die zumindest teilweise auf wenigstens einer Leiterplatte angeordnet sind. Der Aufnahmeraum ist gegen den Einbauraum abgetrennt und nimmt eine Anschlusssteckereinheit auf, in der wenigstens eine Anschlussleitung mit Steckverbindungsmitteln leitungsverbunden ist. Die Anschlusssteckereinheit und das Elektronikgehäuse bilden zusammen ein gemeinsames, zur Umgebung abgeschlossenes Anschlussgehäuse aus.

Wünschenswert ist es aber, eine Reihe von bekannten Nachteilen zu vermeiden und insbesondere eine hohe Flexibilität bei den unterschiedlichen Anwendungen und Motorausführungen zu ermöglichen. Ferner besteht ein Bedürfnis danach, dass ein bereits vorhandenes Elektronik-Gehäuse und die entsprechende Schnittstelle weiterverwendet werden können und kein komplett neues Design und entsprechende Werkzeuge erforderlich sind. Somit besteht ein Bedarf nach einem Baukastenprinzip, nämlich nach einer SteuerEinheit und mehreren Modulen im Kundenanschlussbereich, welche über die selbe Schnittstelle verbunden werden können. Ferner sollte eine kostenoptimierte Lösung angestrebt werden. So kann bei einer steckbaren Lösung auch ein gesonderter Klemmkastendeckel entfallen und die Anzahl der benötigten Bauteile insgesamt reduziert werden. Dies hat nicht nur wirtschaftliche Vorteile sondern auch Qualitative, denn je weniger Bauteile desto weniger Fehler können passieren.

Es ist daher Aufgabe der vorliegenden Erfindung vorbesagte Nachteile zu überwinden und eine verbesserte und insbesondere bauteiloptimierte Lösung für eine Elektronikeinheit mit einer vorzugsweise gedichteten Schnittstelle bzw. einen Elektromotor mit einer solchen Steckverbindung bereitzustellen.

Diese Aufgabe wird durch die Merkmalskombination gemäß Anspruch 1 gelöst.

In einer erfindungsgemäßen Ausführungsform ist hierzu eine steckbare Anschlussbox zum lösbaren Anschluss eines darin integrierten Anschlusssteckverbinders in Steckrichtung (S) in eine steckkompatible Steckbuchse eines Elektronikgehäuses einer Elektronikeinheit eines Elektromotors vorgesehen, wobei die Anschlussbox ein Gehäuse mit einem durch Gehäusewandungen begrenzten, topfartigen Aufnahmebereich zur Aufnahme eines Kontaktträgers des Anschlusssteckverbinders aufweist und wobei im Aufnahmebereich mehrere sich in Steckrichtung (S) erstreckende zylinderförmige Schraubenbuchsen vorgesehen sind und wobei der Kontaktträger an mehreren zu denjenigen Positionen der Schraubenbuchsen korrespondierenden Positionen außenliegende Führungsmittel aufweist, an denen der Kontaktträger in seine Endmontageposition geführt werden kann und in der Endmontageposition die jeweiligen Führungsmittel die zylinderförmigen Schraubenbuchsen zumindest teilweise umgreifen.

Die Führungsmittel haben dabei nicht nur die Aufgabe den Kontaktträger nach der Konfektionierung mit einem Anschlusskabel in seine bestimmungsgemäße Endmontageposition zu bringen, sondern dienen auch als Kodiermittel und zum Fixieren der Lage innerhalb der Anschlussbox ohne jedoch nach dem Befestigen der Anschlussbox an dem Elektronikgehäuse eine permanente Kraft auf den Kunststoff oder einem alternativen Material auszuüben. Der Kontaktträger ist nach der Endmontage der Anschlussbox im Wesentlichen spannungsfrei gelagert.

In der Endmontage der Anschlussbox, wenn diese auf die Steckbuchse an einem Elektronikgehäuse aufgesteckt wurde, können passende Schrauben durch die sich in Steckrichtung (S) erstreckenden hohlzylinderförmigen Schraubenbuchsen gesteckt werden und die Anschlussbox mit dem Elektronikgehäuse zusammengeschraubt werden. In diesem Zustand wirken auch zwischen den Steckpartnern entsprechend zusätzlich angeordnete Dichtungen oder Dichtebenen. Mit Vorteil kann aber die Steckbuchse am Elektronikgehäuse auch so ausgeführt werden, dass der gewünschte IP-Schutz auch im nicht gesteckten Zustand gewährleistet ist.

Mit Vorteil ist weiter vorgesehen, dass der topfartige Aufnahmebereich zur Aufnahme des Kontaktträgers an einer Seite durch einen integral damit verbundenen Deckel verschlossen ist.

In einer ebenfalls vorteilhaften Ausgestaltung der Erfindung sind eine oder mehrere integral an dem Gehäuse der Anschlussbox ausgebildete Kabelverschraubungen vorgesehen, die für eine Kabelverbindung quer zur Steckrichtung (S) durch das Gehäuse in den topfartigen Aufnahmebereich ausgebildet sind.

Erfindungsgemäß ist mit Vorteil weiter vorgesehen, dass im topfartigen Aufnahmebereich wenigstens eine Rastausnehmung vorgesehen ist, in die ein Rastvorsprung einer sich parallel zur der Steckrichtung erstreckenden Rastzunge einrastet, wenn der Kontaktträger in seiner Endmontageposition im Gehäuse der Anschlussbox montiert ist.

In einer weiteren vorteilhaften Ausgestaltung der Erfindung ist vorgesehen, dass die jeweiligen Führungsmittel als sich parallel zur Steckrichtung (S) erstreckende Dome mit einer zumindest teilzylinderförmigen Führungsfläche ausgebildet sind, vorzugsweise mit einem 90°-Abschnitt eines Zylinderkörpers. Dabei handelt es sich dann sozusagen, um eine nach außen offene Kontur einer Innenfläche eines "Teil-Zylinders".

Weiter vorteilhaft ist es, wenn die jeweiligen Führungsmittel an Eckpositionen, vorzugsweise den vier Eckpositionen eines im Wesentlichen rechteckig ausgebildeten Kontaktträgers vorgesehen sind.

Erfindungsgemäß ist weiter mit Vorteil vorgesehen, dass sich von den Gehäusewandungen des Aufnahmebereichs zur Aufnahme des Kontaktträgers mehrere Verbindungsrippen weg erstrecken, die vorzugsweise zu wenigstens einem oder mehreren außerhalb des Aufnahmebereichs angeordneten, sich in Steckrichtung (S) erstreckenden hohlzylinderförmigen Schraubenbuchsen verlaufen und weiter vorzugsweise mit diesen verbunden sind. Aufgrund des erfindungsgemäßen Designs lässt sich die Verbindungskraft beim Anschluss der Anschlussbox an dem Elektronikgehäuse gezielt auch auf Bereich außerhalb der eigentlichen Steckverbindung verlagern. Denkbar ist es aber auch, dass die letztgenannten hohlzylinderförmigen Schraubenbuchsen nur als Stützbuchsen vorgesehen sind, eine Verschraubung mit dem Elektronikgehäuse jedoch nur mittels Schrauben oder Verbindungsmittel durch die innerhalb des Aufnahmeraums liegenden hohlzylinderförmigen Schraubenbuchsen erfolgt.

In einer weiteren vorteilhaften Ausgestaltung der Erfindung ist vorgesehen, dass der Deckel (in seiner Grundform) als ein Teilsegment einer im Wesentlichen kreisförmigen Platte ausgebildet ist und sich an zwei Seiten seitlich mit je einem Teilabschnitt von dem topfartigen Aufnahmebereich quer zur Steckrichtung der Steckverbindung weg erstreckt.

Ein weiterer Aspekt der vorliegenden Erfindung betrifft ein entsprechendes Elektronikgehäuse einer Elektronikeinheit eines Elektromotors ausgebildet mit einer Steckbuchse in einem gehäuseseitigen Bauraum zur Aufnahme einer wie zuvor beschriebenen steckbaren Anschlussbox, wobei im eingesteckten Zustand des in der Anschlussbox integrierten Anschlusssteckverbinders in die Steckbuchse, die Anschlussbox das Elektronikgehäuse in seiner Form zu einem zylinderförmigen Topf ergänzt. In einer entsprechend bevorzugten Ausgestaltung der Erfindung ist das Elektronikgehäuse als topfförmiges Gehäuse mit einem umlaufenden ringförmigen Gehäuseflansch ausgebildet, wobei die Ausnehmung für die Anschlussbox als seitlich offene Vertiefung im topfförmigen Gehäuse angeordnet ist.

Weiter vorteilhaft ist es, wenn die Elektronikeinheit für einen Elektromotor mit einem Elektronikgehäuse ausgebildet ist, in der eine, auf einer Leiterplatte angeordnete Steuerelektronik angeordnet ist, auf der eine Schnittstellenbaugruppe mit einer Kontakte aufweisenden Steckbuchse zum Einstecken des Anschlusssteckverbinders vorgesehen ist, wobei ferner eine Anschlussbox vorgesehen ist, dessen Anschlusssteckverbinders in die Steckbuchse eingesteckt oder einsteckbar ist.

Ein weiterer Aspekt der vorliegenden Erfindung betrifft einen Elektromotor, vorzugsweise einen Aussenläufermotor mit einer wie zuvor beschriebenen erfindungsgemäßen Elektronikeinheit.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine isometrische Explosionsansicht eines Ausführungsbeispiels einer Elektronikeinheit,
- Fig. 2: eine Unteransicht auf eine erfindungsgemäße Anschlussbox,
- Fig. 3: eine perspektivische Ansicht auf einen Kontaktträger der Anschlussbox aus der Fig. 2,
- Fig. 4: eine isometrische Explosionsansicht auf die Baugruppen der Anschlussbox.

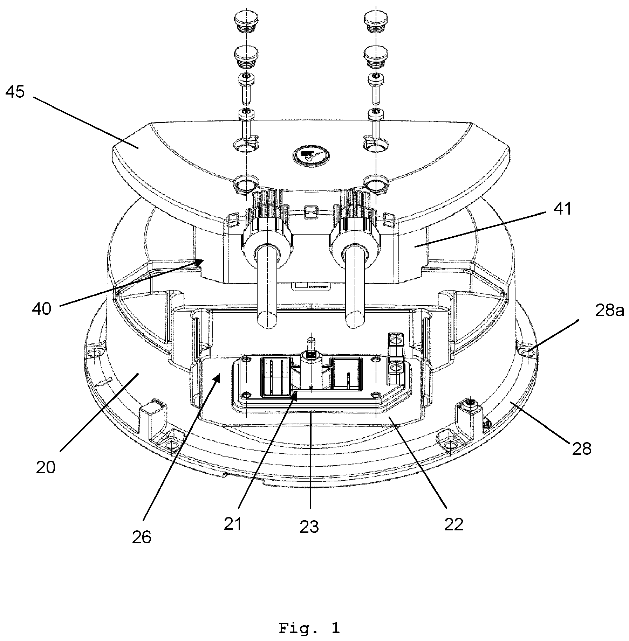

Im Folgenden wird die Erfindung mit Bezug auf die Figuren 1 bis 4 anhand eines Ausführungsbeispiels näher beschrieben, wobei gleiche Bezugszeichen in den Figuren auf die gleichen funktionalen und/oder strukturellen Merkmale hinweisen.

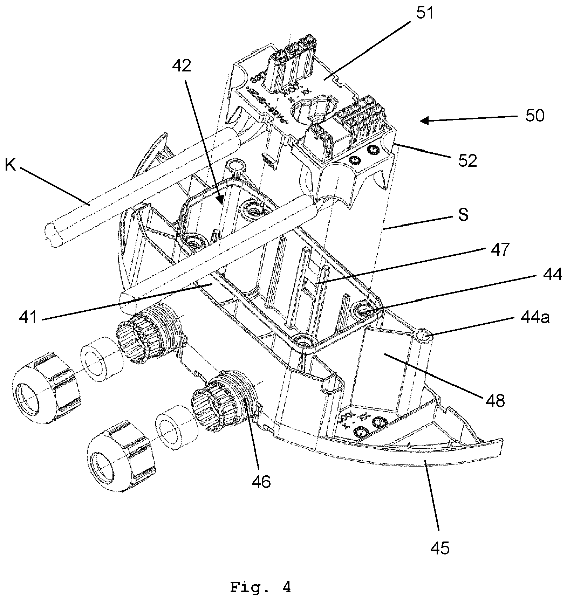

In den Figuren 1 und 4 sind isometrische Explosionsansichten eines Ausführungsbeispiels einer erfindungsgemäßen Lösung gezeigt. Die Elektronikeinheit umfasst eine nicht näher gezeigte Leiterplatte, ein Elektronikgehäuse 20 und eine Anschlussbox 40, die im Folgenden näher beschrieben werden.

Wie in der Fig. 1 zu erkennen ist, weist das Elektronikgehäuse 20 eine topfartige Form auf, wobei außen umlaufend ein Gehäuseflansch 28 mit Befestigungsöffnungen 28a vorgesehen ist. Wie weiter in der Fig. 1 zu erkennen ist, ist in dem topfförmigen Elektronikgehäuse 20 ein Aufnahmeraum 26 vorgesehen, welcher als Gehäuseausnehmung und als ein nach außen offener Aufnahmeraum 26 ausgebildet ist, in den sich eine später noch näher beschriebene Anschlussbox 40 einsetzen und montieren lässt. Im Aufnahmeraum 21 ist eine im Wesentlichen parallel zur Deckelfläche verlaufende Wandung 22 vorgesehen. In der Wandung 22 ist eine Öffnung 23 vorgesehen, durch die hindurch die Schnittstellenbaugruppe, welche auf der nicht näher gezeigten Leiterplatte montiert ist, zugänglich ist. Im Bereich des Aufnahmeraums 26 befindet sich die gehäuseseitige Steckbuchse 21 (mit beispielhaften Kontaktkavitäten KK für geeignete Kontaktelemente), die steckkompatibel zu dem korrespondierenden Anschlussteckverbinder 50 der Anschlussbox 40 ausgebildet ist.

In den Figuren 1, 2 und 4 ist die Anschlussbox 40 näher dargestellt. Die Anschlussbox 40 ist bestimmungsgemäß in ihrer Form so ausgebildet, dass sie sich korrespondierend in den Aufnahmeraum 26 des Elektronikgehäuses 20 montieren lässt und bevorzugt mit dem Elektronikgehäuse 20 mittels Befestigungsmittel verbinden lässt und dessen Form zu einem zylinderförmigen Topf ergänzt. Hierzu ist der Deckel 45 der Anschlussbox 40 als ein Teilsegment einer im Wesentlichen kreisförmigen Platte ausgebildet und erstrecken sich an zwei diametral gegenüberliegenden Seiten des Deckels 45 seitlich mit je einem Teilabschnitt 45a, 45b von dem topfartigen Aufnahmebereich 42 quer zur Steckrichtung (S) weg, um damit die Oberfläche des Elektronikgehäuses 20 zu ergänzen.

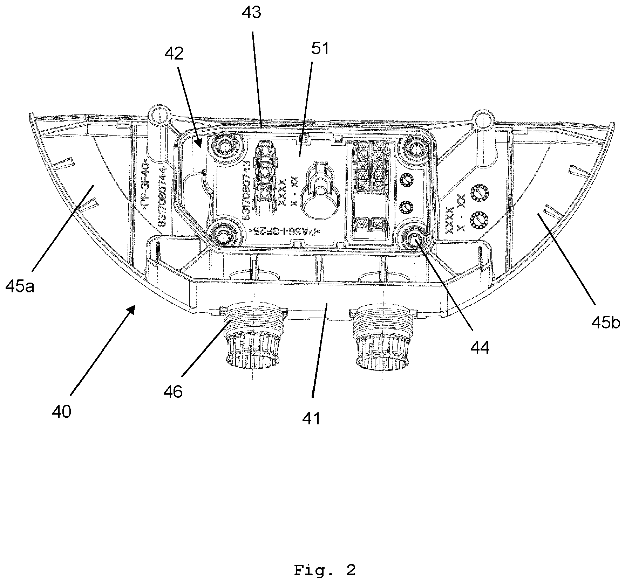

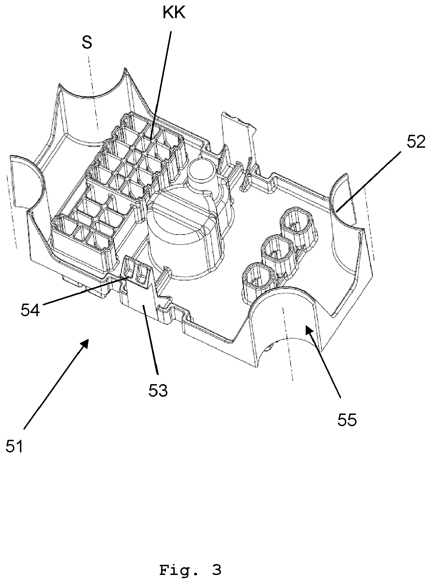

Die steckbare Anschlussbox 40, ist wie in den Figuren dargestellt, zum steckbaren Anschluss eines darin integrierten Anschlusssteckverbinders 50 in Steckrichtung S in die steckkompatible Steckbuchse 21 des Elektronikgehäuses 20 einer Elektronikeinheit eines Elektromotors ausgebildet. Die Anschlussbox 40 besitzt ein Gehäuse 41 mit einem durch Gehäusewandungen 43 begrenzten, topfartigen Aufnahmebereich 42, wie dies gut in den Ansichten der Fig. 2 und 4 zu erkennen ist. Dieser Aufnahmebereich 42 ist ausgebildet zur Aufnahme eines Kontaktträgers 51, wie in der Fig. 3 gezeigt.

Der Kontaktträgers 51 ist ein Kontakte tragender Kontaktträger 51 des Anschlusssteckverbinders 50. Im Aufnahmebereich 42 der Anschlussbox 40 sind hier vier sich in Steckrichtung S erstreckende hohlzylinderförmige Schraubenbuchsen 44 vorgesehen. Mit wie in der Figur 1 beispielhaft gezeigten Schrauben lässt sich so eine mechanisch lösbare Verbindung mit dem Elektronikgehäuse 20 herstellen, indem die dafür vorgesehenen Schrauben durch die hohlzylinderförmigen Schraubenbuchsen 44 hindurchgeführt werden und in entsprechende Buchsen bzw. Gewindekernlöcher am Elektronikgehäuse fixierend eingreifen.

Der Kontaktträger 51 besitzt, wie in der Fig. 3 gut ersichtlich, an seinen EckPositionen je eine gebogene Führungsfläche 55 aufweisende außenliegende Führungsmittel 52. Diese Positionen stimmen korrespondierend mit den Positionen der Schraubenbuchsen 44 überein und der Kontaktträger 51 kann an diesen, in seine Endmontageposition, geführt bzw. betätigt werden. Die vier Führungsmittel 52 sind insofern als sich parallel zur Steckrichtung S erstreckende Dome mit einer zumindest teilzylinderförmigen Führungsfläche 55 ausgebildet und zwar mit einem innenliegenden 90°-Abschnitt eines Zylinderkörpers. Der Winkel kann allerdings auch größer oder kleiner als der gewählte Winkel in dem gezeigten Ausführungsbeispiel ausgebildet sein.

In der Endmontageposition des Kontaktträgers 51 umgreifen die jeweiligen Führungsmittel 52 die zylinderförmigen Schraubenbuchsen 44 zumindest teilweise, wie dies gut in der Aufsicht der Figur 2 gezeigt ist, wo sich der Kontaktträger 51 in seiner Endmontageposition befindet.

Der topfartige Aufnahmebereich 42 zur Aufnahme des Kontaktträgers 51 ist an einer oberen Seite durch einen integral mit dem Gehäuse der Anschlussbox 40 verbundenen Deckel 45 verschlossen. Ebenfalls in der Figur 4 gut erkennbar ist, dass zwei integral an dem Gehäuse 41 der Anschlussbox 40 ausgebildete Kabelverschraubungen 46 vorgesehen sind, die für eine Kabelverbindung mit Kabel K quer zur Steckrichtung S durch das Gehäuse 41 in den topfartigen Aufnahmebereich 42 ausgebildet sind. Bevorzugt sind diese Kabelverschraubungen 46 (ohne die Überwurfmuttern) direkt am Gehäuse 41 angespritzt.

Im topfartigen Aufnahmebereich 42 sind diametral gegenüberliegend zwei Rastausnehmung 47 vorgesehen, in die je ein Rastvorsprung 54 einer sich parallel zur der Steckrichtung (S) erstreckenden Rastzunge 53 einrastet, wenn der Kontaktträger 51 in seiner Endmontageposition im Gehäuse 41 der Anschlussbox 40 montiert ist.

Von den Gehäusewandungen 43 des Aufnahmebereichs 42 erstrecken sich mehrere Verbindungsrippen 48 weg und münden in hohlzylinderförmigen Domen 44a.

Mit Hilfe der Figuren ist ferner ersichtlich, dass mittels der vorliegenden Erfindung ein vorteilhafter Fügeprozess und eine montagefreundliche Anschlussmöglichkeit der Elektronikeinheit gegeben ist. Aufgrund der speziellen Schnittstellenausführung der Schnittstellenbaugruppe ist ferner eine breite Skalierbarkeit der Kontaktbelegung möglich und lassen sich insbesondere applikationsspezifische Anordnungen von Signal- und Power-Kontakten und demnach spezifische Schnittstellenkonfigurationen mit der gezeigten Anschlussbox realisieren.

## Patentansprüche

1. Steckbare Anschlussbox (40) zum steckbaren Anschluss eines darin integrierten Anschlusssteckverbinders (50) in Steckrichtung (S) in eine steckkompatible Steckbuchse (21) eines Elektronikgehäuses (20) einer Elektronikeinheit (1) eines Elektromotors, wobei die Anschlussbox (40) ein Gehäuse (41) mit einem durch Gehäusewandungen (43) begrenzten, topfartigen Aufnahmebereich (42) zur Aufnahme eines Kontaktträgers (51) des Anschlusssteckverbinders (50), wobei im Aufnahmebereich (42) mehrere sich in Steckrichtung (S) erstreckende hohlzylinderförmige Schraubenbuchsen (44) vorgesehen sind und wobei der Kontaktträger (51) an mehreren zu denjenigen Positionen der Schraubenbuchsen (44) korrespondierenden Positionen außenliegende Führungsmittel (52) aufweist, an denen der Kontaktträger (51) in seine Endmontageposition geführt werden kann und in der Endmontageposition die jeweiligen Führungsmittel (52) die zylinderförmigen Schraubenbuchsen (44) zumindest teilweise umgreifen.

2. Steckbare Anschlussbox (40) nach Anspruch 1, **dadurch gekennzeichnet, dass** der topfartige Aufnahmebereich (42) zur Aufnahme des Kontaktträgers (51) an einer Seite durch einen integral damit verbundenen Deckel (45) verschlossen ist.

3. Steckbare Anschlussbox (40) nach Anspruch 1 oder 2, **dadurch gekennzeichnet, dass** eine oder mehrere integral an dem Gehäuse (41) der Anschlussbox (40) ausgebildete Kabelverschraubungen (46) vorgesehen ist bzw. sind, die für eine Kabelverbindung quer zur Steckrichtung (S) durch das Gehäuse (41) in den topfartigen Aufnahmebereich (42) ausgebildet sind.

4. Steckbare Anschlussbox (40) nach einem der vorhergehenden Ansprüche, **dadurch gekennzeichnet, dass** im topfartigen Aufnahmebereich (42) wenigstens eine Rastausnehmung (47) vorgesehen ist, in die ein Rastvorsprung (54) einer sich parallel zur der Steckrichtung (S) erstreckenden Rastzunge (53) einrastet, wenn der Kontaktträger (51) in seiner Endmontageposition im Gehäuse (41) der Anschlussbox (40) montiert ist.

5. Steckbare Anschlussbox (40) nach einem der vorhergehenden Ansprüche, **dadurch gekennzeichnet, dass** die jeweiligen Führungsmittel (52) als sich parallel zur Steckrichtung (S) erstreckende Dome mit einer zumindest teilzylinderförmigen Führungsfläche (55) ausgebildet sind, vorzugsweise mit einem innenliegenden 90° Abschnitt eines Zylinderkörpers.

6. Steckbare Anschlussbox (40) nach einem der vorhergehenden Ansprüche, **dadurch gekennzeichnet, dass** die jeweiligen Führungsmittel (52) an Eckpositionen, vorzugsweise den vier Eckpositionen eines im Wesentlichen rechteckig ausgebildeten Kontaktträger (51) vorgesehen sind.

7. Steckbare Anschlussbox (40) nach einem der vorhergehenden Ansprüche, **dadurch gekennzeichnet, dass** sich von den Gehäusewandungen (43) des Aufnahmebereichs (42) zur Aufnahme des Kontaktträgers (51) mehrere Verbindungsrippen (48) weg erstrecken, die vorzugsweise zu wenigstens einem oder mehreren außerhalb des Aufnahmebereich (42) angeordneten, sich in Steckrichtung (S) erstreckende zylinderförmige Schraubenbuchsen (44) verlaufen und weiter vorzugsweise mit diesen verbunden sind.

8. Steckbare Anschlussbox (40) nach einem der vorhergehenden Ansprüche 2 - 7, **dadurch gekennzeichnet, dass** der Deckel (45) als ein Teilsegment einer im Wesentlichen kreisförmigen Platte ausgebildet ist und sich an zwei Seiten seitlich mit je einem Teilabschnitt (45a, 45b) von dem topfartigen Aufnahmebereich (42) quer zur Steckrichtung (S) weg erstreckt.

9. Elektronikgehäuses (20) einer Elektronikeinheit (1) eines Elektromotors ausgebildet mit einer Steckbuchse (21) in einem Bauraum zur Aufnahme einer steckbaren Anschlussbox (40) nach einem der vorhergehenden Ansprüchen 1 bis 8, wobei im eingesteckten Zustand des integrierten Anschlusssteckverbinders (50) in der Steckbuchse (21) die Anschlussbox (40) das Elektronikgehäuses (20) in seiner Form zu einem zylinderförmigen Topf ergänzt.

10. Elektronikeinheit (1) für einen Elektromotor, die mit einem Elektronikgehäuse (20) nach Anspruch 9 ausgebildet ist, in der eine, auf einer Leiterplatte angeordnete Steuerelektronik angeordnet ist, auf der eine Schnittstellenbaugruppe mit einer Kontakte aufweisenden Steckbuchse (21) zum Einstecken des Anschlusssteckverbinders (50) vorgesehen ist, wobei ferner eine Anschlussbox (40) nach einem der vorhergehenden Ansprüchen 1 bis 8 vorgesehen ist, dessen Anschlusssteckverbinders (50) in die Steckbuchse (21) eingesteckt oder einsteckbar ist.

11. Elektromotor, vorzugsweise ein Außenläufermotor mit einer Elektronikeinheit (1) gemäß einem der vorhergehenden Ansprüchen 9 oder 10.
